# EUROPEAN PATENT APPLICATION

(11) **EP 1 878 779 A1**
(43) Date of publication of application: **16.01.2008**
(21) Application number: 06731893.1
(22) Date of filing: 14.04.2006
(51) Int. Cl.: C09K 11/59, C09K 11/61, H01J 11/02

(54) **FLUORESCENT SUBSTANCE AND LIGHT EMITTING DEVICE**

(30) Priority: 15.04.2005 JP 2005117897
(71) Applicant: MATSUSHITA ELECTRIC INDUSTRIAL CO., LTD., Osaka 571-8501 (JP)
(72) Inventor: OKUYAMA, Kojiro c/o Matsushita Electric Industrial Co., Ltd., 2-1-61 Shiromi, Chuo-ku, Osaka 540-6207 (JP); ZUKAWA, Takehiro c/o Matsushita Electric Industrial Co., Ltd., 2-1-61 Shiromi, Chuo-ku, Osaka 540-6207 (JP); SAKAI, Masahiro c/o Matsushita Electric Industrial Co., Ltd., 2-1-61 Shiromi, Chuo-ku, Osaka 540-6207 (JP); SHIRAISHI, Seigo c/o Matsushita Electric Industrial Co., Ltd., 2-1-61 Shiromi, Chuo-ku, Osaka 540-6207 (JP)
(74) Representative: Eisenführ, Speiser & Partner
(86) International application number: PCT/JP2006/307957
(87) International publication number: WO 2006/112404

(57) **Abstract**

The present invention provides a phosphor that has high luminance, a property of low luminance degradation during PDP driving, and chromaticity y comparable to that of BAM:Eu. The present invention is the phosphor that is represented by the general formula xAO • y₁EuO • y₂EuO_{3/2} • DO • zSiO₂ • wCaCl₂ wherein A is at least one selected from Sr and Ba, D is at least one selected from Mg and Zn, and 2.970≤x≤3.500, 0.001≤y₁+y₂≤0.030, 1.900≤z≤2.100, and 0.001≤w≤0.100 are satisfied, and that has 50 mol % or less of the divalent Eu ratio (ratio of the divalent Eu element to the total of the Eu elements) in the vicinity of the surface of the phosphor particle.

## Description

### Technical Field

The present invention relates to a phosphor that is used in a plasma display panel, a mercury free fluorescent lamp or the like, and to a light-emitting device such as a plasma display panel.

### Background Art

Various aluminate phosphors are utilized as phosphors for energy-saving fluorescent lamps. As a blue phosphor, for example, (Ba,Sr)MgAl₁₀O₁₇:Eu is mentioned. As a green phosphor, for example, CeMgAl₁₁O₁₉:Tb, and BaMgAl₁₀O₁₇:Eu,Mn are mentioned.

In recent years, (Ba,Sr)MgAl₁₀O₁₇:Eu, which has high luminance at vacuum-ultraviolet excitation, is used as a blue phosphor for a plasma display panel (PDP).

However, when a PDP, especially one using the blue phosphor (Ba,Sr)MgAl₁₀O₁₇:Eu, is driven for a long period, the luminance is degraded significantly. Hence, in the PDP use there is a strong demand for a phosphor that shows less luminance degradation even after the long-time driving.

In response to this, a method using a silicate phosphor is proposed in JP2003-132803A.

However, the method described in JP2003-13203A has not achieved inhibition of the luminance degradation of the phosphor during PDP driving, while the high luminance is given. Moreover, the chromaticity y is higher and the color purity is worse than that of a blue phosphor (Ba,Sr)MgAl₁₀O₁₇:Eu (BAM:Eu) that is currently used in the PDP.

### Disclosure of Invention

The present invention has achieved a solution to the above problems, and it is an object of the present invention to provide a phosphor that has high luminance, a property of low luminance degradation during PDP driving, and chromaticity y comparable to that of BAM:Eu. It is a further object of the present invention to provide a PDP with a long life using the above phosphor.

The phosphor of the present invention is represented by the general formula xAO•y₁EuO• y₂EuO_{3/2}• DO• zSiO₂• wCaCl₂ wherein A is at least one selected from Sr and Ba, D is at least one selected from Mg and Zn, and 2.970≤x≤3.500, 0.001≤y₁+y₂≤0.030, 1.900≤z≤2.100, and 0.001≤w≤0.100 are satisfied, and has 50 mol % or less of the divalent Eu ratio (ratio of the divalent Eu element to the total of the Eu elements) in the vicinity of the surface of the phosphor particle. This phosphor has the chromaticity y comparable to that of BAM:Eu and the high luminance, and shows the low luminance degradation during PDP driving. Hence, a light-emitting device with a long life in which the luminance is not degraded even after long-time driving is provided by using this phosphor.

Preferably, the phosphor of the present invention is represented by the general formula x'SrO•_{1'}uO•y_{2'}EuO_{3/2}• MgGO• z'SiO₂•w'CaCl₂ wherein 2.980≤x'≤3.000, 0.010≤y_{1'}+y_{2'}≤0.020, 1.900≤z'≤2.100, and 0.010≤w'≤0.040 are satisfied, and has 20 mol % or less of the divalent Eu ratio (ratio of the divalent Eu element to the total of the Eu elements) in the vicinity of the surface of the phosphor particle. In this phosphor, the luminance degradation is more inhibited.

Next, the light-emitting device of the present invention is a light-emitting device containing the above-mentioned phosphor in the phosphor layer. The light-emitting device (e.g., PDP, fluorescent panel, and fluorescent lamp etc.) has the blue luminance and chromaticity y comparable to or better than that of a light-emitting device using BAM:Eu that is used conventionally. In addition, the light-emitting device has the excellent resistance to luminance degradation.

Last, the PDP of the present invention includes a front panel, a back panel that is arranged to face the front panel, barrier ribs that define the clearance between the front panel and the back panel, a pair of electrodes that are disposed on the back panel or the front panel, and a discharged gas that is present between the electrodes and contains xenon. By applying a control signal between the electrodes using an external drive circuit, a vacuum ultraviolet ray can be emitted. The PDP further includes phosphor layers that emit visible light induced by the vacuum ultraviolet ray, and the phosphor layer contains the above-mentioned phosphor. This PDP has the blue luminance and chromaticity y comparable to or better than that of a PDP using BAM:Eu that is conventionally used. In addition, the PDP has the excellent resistance to luminance degradation along with image display.

### Brief Description of Drawings

Fig. 1 shows one example of peaks derived from Eu in the measurement by X-ray photoelectron spectroscopy.
Fig. 2 is a schematic cross-sectional perspective view showing an example of a construction of the PDP of the present invention.

### Best Mode for Carrying Out the Invention

Hereinafter, the embodiments of the present invention will be described in detail.

The phosphor of the present invention is represented by the general formula xAO• y₁EuO •y₂EuO_{3/2}• DO• zSiO₂•wCaCl₂₊ Here, A is at least one selected from Sr and Ba, and D is at least one selected from Mg and Zn. A is preferably Sr, and D is preferably Mg. With respect to x, y₁, y₂, z and w, 2.970≤x≤3.500, 0.001≤y₁+y₂≤0.030, 1.900≤z≤2.100, and 0.001≤w≤0.100 are satisfied, and preferably, 2.980≤x≤3.000, 0.010≤y₁+y₂≤0.020, 1.900≤z≤2.100, and 0.010≤w≤0.040 are satisfied.

In the phosphor of the present invention, the divalent Eu ratio (ratio of the divalent Eu element to the total of the Eu elements) in the vicinity of the surface of the phosphor particle is 50 mol % or less (including 0%). Heretofore, with respect to the blue phosphors of a BAM:Eu type, phosphors that have the high ratio of the divalent Eu element to the total of the Eu elements have been manufactured so that a lot of divalent Eu is contained, since the divalent Eu serves as an activator. However, the present inventors have found that unlike the conventional phosphors, the silicate phosphor of the present invention has chromaticity y comparable to that of BAM:Eu, high luminance, and an excellent resistance to luminance degradation, for the reason that the divalent Eu ratio is low in the vicinity of the surface of the phosphor particle.

In the present invention, the divalent Eu ratio in the vicinity of the surface of the phosphor particle is a value measured by X-ray photoelectron spectroscopy (XPS). XPS is a surface analysis method to measure the energy of photoelectrons that have come out from a sample by irradiating the sample surface with X-ray of a known wavelength (e.g., Al Kα line, energy value: 1487eV). Thereby information in the area within generally about 4 nm from the sample surface can be obtained selectively. Relative sensitivity factors of each element already have been demonstrated and therefore it can be said that the measurement of the ratio of metal elements in a sample surface by XPS is an established technique. Hence, in the present invention, the vicinity of the surface of the phosphor particle means an area that is measured by XPS, for example, the area from the surface to about 4 nm toward the center.

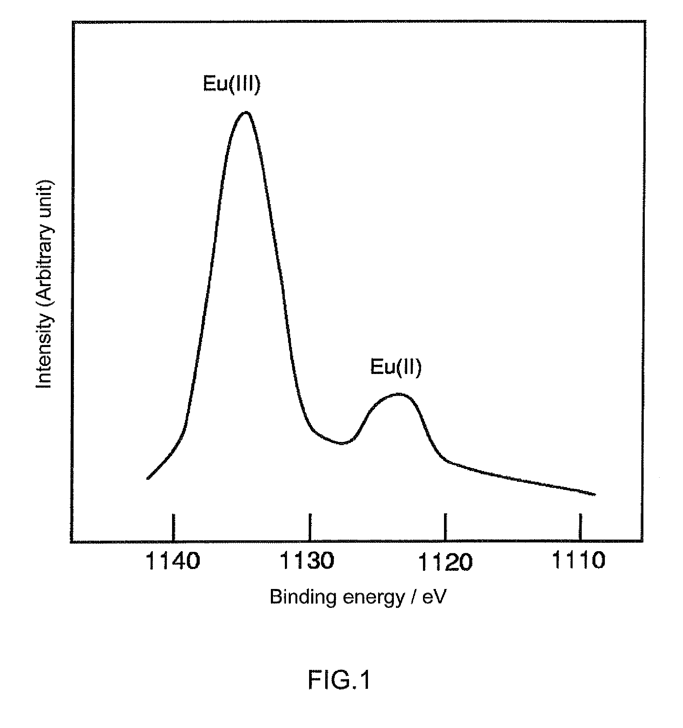

In the XPS, photoelectron energy at the peak shifts depending on the chemical state of an element (this shift is referred to as chemical shift), and therefore, with respect to the peaks derived from Eu, a peak with binding energy of around 1124 eV derived from divalent Eu and a peak with binding energy of around 1132 eV derived from trivalent Eu are clearly distinguished as shown in Fig. 1. The divalent Eu ratio can be calculated from the intensity ratio (area ratio of peaks) of the peak derived from divalent Eu and the peak derived from trivalent Eu.

The divalent Eu ratio is preferably 20% or less and more preferably 10% or less. The smaller the divalent Eu ratio is, the better the luminance retaining rate becomes.

Hereinafter, the method for producing the phosphor of the present invention will be described. The method for producing the phosphor of the present invention is not limited thereto.

As a strontium source material for the silicate phosphor of the present invention, a strontium compound that can be converted into strontium oxide by firing, such as strontium hydroxide, strontium carbonate, strontium nitrate, strontium halide or strontium oxalate having high purity (purity of 99% or more) may be used. Strontium oxide having high purity (purity of 99% or more) also may be used.

As a barium source material, a barium compound that can be converted into barium oxide by firing, such as barium hydroxide, barium carbonate, barium nitrate, barium halide or barium oxalate having high purity (purity of 99% or more) may be used. Barium oxide having high purity (purity of 99% or more) also may be used.

As a magnesium source material, a magnesium compound that can be converted into magnesium oxide by firing, such as magnesium hydroxide, magnesium carbonate, magnesium nitrate, magnesium halide, magnesium oxalate or basic magnesium carbonate having high purity (purity of 99% or more) may be used. Magnesium oxide having high purity (purity of 99% or more) also may be used.

As a europium source material, a europium compound that can be converted into europium oxide by firing, such as europium hydroxide, europium carbonate, europium nitrate, europium halide, or europium oxalate having high purity (purity of 99% or more) may be used. Europium oxide having high purity (purity of 99% or more) also may be used.

As a zinc source material and a silicon source material, various source materials that can be converted into oxides, or oxide source materials may be used in the same way.

As a calcium source material, calcium chloride having high purity (purity of 99% or more) may be used.

The method for mixing raw materials may be wet blending in a solution or dry blending of dry powders. A ball mill, a stirred media mill, a planetary mill, a vibration mill, a jet mill, a V-type mixer, an agitator and the like, which are in general industrial use, may be used.

Firing of the mixed powders is carried out within the temperature range of 800 to 1300°C for about 1 to 10 hours. Here, in order to control the divalent Eu ratio in the vicinity of the surface of the phosphor particle to 50% or less, the firing has to be carried out under a weaker reducing atmosphere than conventional. The firing is carried out, for example, under the atmosphere containing oxygen and hydrogen, specifically, in the mixed gas of nitrogen, hydrogen and oxygen. In this case, the divalent Eu ratio can be controlled by precisely controlling a partial pressure of oxygen in the mixed gas. The lower the partial pressure of oxygen is, the higher the divalent Eu ratio in the vicinity of the surface of the phosphor particle becomes.

As a furnace used for the firing, furnaces that is in general industrial use may be used. A gas furnace or an electric furnace of batch type or continuous type such as a pusher furnace may be used.

When a hydroxide, a carbonate, a nitrate, a halide, an oxalate or the like, which can be converted into oxide by firing is used as a source material, it is preferable that pre-firing is carried out within the temperature range of 800 to 1250°C before the main firing.

The particle size distribution and flowability of the phosphor powder can be adjusted by crushing the obtained phosphor powder again using a ball mill, jet mill, or the like, and further by washing or classification, if necessary.

A light-emitting device having good luminance, chromaticity and luminance retaining rate can be costructed by applying the phosphor of the present invention to a light-emitting device having a phosphor layer. Specifically, in a light-emitting device having a phosphor layer in which BAM:Eu is used, all or part of BAM:Eu is replaced with the phosphor of the present invention, and a light-emitting device may be costructed according to a known method. Examples of the light-emitting device include a plasma display panel, a fluorescent panel, and a fluorescent lamp, and among them, a plasma display panel is suitable.

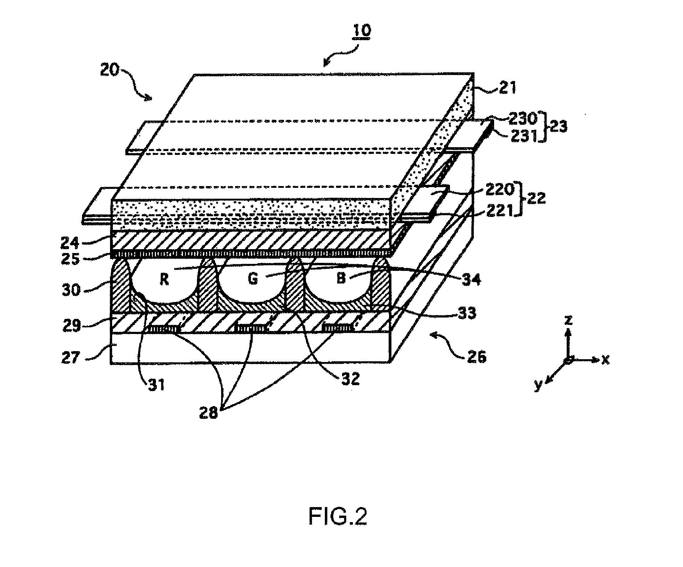

Hereinafter, an embodiment wherein the phosphor of the present invention is applied to PDP will be described with an example of an AC surface-discharge type PDP. Fig. 2 is a cross-sectional perspective view showing a principal structure of an AC surface-discharge type PDP 10. It should be noted that the PDP shown here is illustrated for convenience' sake with a size that is appropriate for a specification of 1024×768 pixels, which is 42-inch class, and the present invention may be applied to other sizes and specifications as well.

As shown in Fig. 2, this PDP 10 includes a front panel 20 and a back panel 26, and these panels are arranged with their main surfaces facing each other.

The front panel 20 includes a front panel glass 21 as a front substrate, strip-shaped display electrodes (X-electrode 23, Y-electrode 22) provided on one main surface of the front panel glass 21, a front-side dielectric layer 24 having a thickness of about 30 µm covering the display electrodes, and a protective layer 25 having a thickness of about 1.0 µm provided on the front-side dielectric layer 24.

The above display electrode includes a strip-shaped transparent electrode 220 (230) with a thickness of 0.1 µm and width of 150 µm, and a bus line 221 (231) having a thickness of 7 µm and width of 95 µm and laid on the transparent electrode. A plurality of pairs of the display electrodes are disposed in the y direction, where the x direction is a longitudinal direction.

Each pair of display electrodes (X-electrode 23, Y-electrode 22) is electrically connected to a panel drive circuit (not shown) in the vicinity of the ends of the width direction (y direction) of the front panel glass 21. It should be noted that the Y-electrodes 22 are collectively connected to the panel drive circuit and the X-electrodes 23 are each independently connected to the panel drive circuit. When the Y-electrodes 22 and the certain X-electrodes 23 are fed using the panel drive circuit, a surface discharge (sustained discharge) is generated in the gap (approximately 80 µm) between the X-electrode 23 and the Y-electrode 22. The X-electrode 23 can operate as a scan electrode, and in this case, a write discharge (address discharge) can be generated between the X-electrode 23 and the after-mentioned address electrode 28.

The above-mentioned back panel 26 includes a back panel glass 27 as a back substrate, a plurality of address electrodes 28, a back-side dielectric layer 29, barrier ribs 30, and phosphor layers 31 to 33, each of which corresponds to one color of red (R), green (G), and blue (B). The phosphor layers 31 to 33 are provided so that they contact with side walls of two adjacent barrier ribs 30 and with the back-side dielectric layer 29 between the adjacent barrier ribs 30, and repeatedly disposed in sequence in the x direction.

The blue phosphor layer (B) contains the above-mentioned silicate phosphor of the present invention. It should be noted that the phosphor of the present invention may be used alone or used as a mixture with a known phosphor such as BAM:Eu. On the other hand, the red phosphor layer and the green phosphor layer contain phosphors commonly used. Examples of a red phosphor include (Y, Gd)BO₃:Eu, and Y₂O₃:Eu. Examples of a green phosphor include Zn₂SiO₄:Mn, YBO₃:Tb, and (Y,Gd)BO₃:Tb.

Each phosphor layer can be formed by applying a phosphor ink in which phosphor particles are dissolved to the barrier ribs 30 and the back-side dielectric layer 29 by a known applying method such as a meniscus method and a line jet method, and drying and firing (e.g., at 500°C, for 10 min) them. The above-mentioned phosphor ink can be prepared, for example, by mixing 30% by mass of the blue phosphor with a volume average particle diameter of 2 µm, 4.5% by mass of ethyl cellulose with mass average molecular weight of about 200,000, and 65.5% by mass of butyl carbitol acetate. In this regard, it is preferable that a viscosity thereof is adjusted eventually to 2000 to 6000 cps, since the adherence of the ink to the barrier ribs 30 can be enhanced.

The address electrodes 28 are provided on the one main surface of the back panel glass 27. The back-side dielectric layer 29 is provided so as to cover the address electrodes 28. The barrier ribs 30 have a height of about 150 µm and width of about 40 µm, and the longitudinal direction is in the y direction. The barrier ribs 30 are provided on the back-side dielectric layer 29 so as to correspond to pitches of the adjacent address electrodes 28.

Each of the address electrodes 28 has a thickness of 5 µm and width of 60 µm. A plurality of address electrodes 28 are disposed in the x direction, where the y direction is a longitudinal direction. The address electrodes 28 are disposed at a certain pitch (about 150 µm). A plurality of address electrodes 28 are each independently connected to the above-mentioned panel drive circuit. Address discharge can be generated between a certain address electrodes 28 and a certain X-electrode 23 by feeding each address electrode individually.

The front panel 20 and the back panel 26 are disposed so that the address electrode 28 and the display electrode are orthogonal. Peripheral portions of both panel 20 and 26 are bonded and sealed by a frit glass sealing portion (not shown) in which the frit glass is used as a sealing member.

In an enclosed space between the front panel 20 and the back panel 26, which has been bonded and sealed by the frit glass sealing portion, a discharge gas composed of a rare gas such as He, Xe and Ne is included at a certain pressure (ordinarily about 6.7×10⁴ to 1.0×10⁵ Pa).

It should be noted that a space corresponding to a space between two adjacent barrier ribs 30 is a discharge space 34. A region where a pair of display electrodes and one address electrode 28 intersect with a discharge space 34 in between corresponds to a cell used for displaying images. It should be noted that in this embodiment, the cell pitch in the x direction is set to approximately 300 µm and the cell pitch in the y direction is set to approximately 675 µm.

When the PDP 10 is driven, a sustained discharge is generated by applying a pulse to between a pair of the display electrodes (X-electrode 23, Y-electrode 22) after an address discharge is generated by applying a pulse voltage to the certain address electrode 28 and the certain X-electrode 23 by a panel drive circuit. A prescribed image can be displayed on the front panel side by letting the phosphors contained in the phosphor layers 31 to 33 emit visible light using the ultraviolet ray with a short wavelength (resonance line with a central wavelength of about 147 nm and molecular beam with a central wavelength of 172 nm) thus generated.

The phosphor of the present invention can be applied to a fluorescent panel including a fluorescent layer that is excited by an ultraviolet ray and then emits light according to a known manner. This fluorescent panel has higher luminance and excellent resistance to luminance degradation compared to the conventional fluorescent panels. This fluorescent panel can be used, for example, as a backlight of a liquid crystal display device.

The phosphor of the present invention can be applied also to a fluorescent lamp (e.g., electrodeless fluorescent lamp etc.) according to a known manner. This fluorescent lamp has higher luminance and excellent resistance to luminance degradation compared to the conventional fluorescent lamps.

Hereinafter, the phosphor of the present invention will be described in detail giving Examples.

### (Examples of manufacture of phosphors)

As starting materials, SrCO₃, BaCO₃, Eu₂O₃, MgO, ZnO, SiO₂, and CaCl₂ were used. These were weighed according to the predetermined composition, and wet-mixed in pure water using a ball mill.

The mixture was dried at 150°C for 10 hours and the dried powder was fired in air at 1100°C for 4 hours. The pre-fired product was fired in a mixed gas of nitrogen, hydrogen and oxygen at 1100 to 1300°C for 4 hours and a phosphor thus was obtained. It should be noted that the divalent Eu ratio in the vicinity of the surface of the phosphor particle was varied by precisely controlling a partial pressure of oxygen in the mixed gas. In the case of a partial pressure of oxygen of 10⁻¹⁶ atm, the divalent Eu ratio was 80%. In the case of a partial pressure of oxygen of 10^{-15.5} atm, the divalent Eu ratio was 50%. In the case of a partial pressure of oxygen of 10⁻¹⁴ atm, the divalent Eu ratio was 20%. In the case of a partial pressure of oxygen of 10⁻¹² atm, the divalent Eu ratio was 10%.

The divalent Eu ratio in the vicinity of the surface of the obtained phosphor particle was calculated from the intensity ratio (area ratio of peaks) of the peak derived from divalent Eu and the peak derived from trivalent Eu by XPS (manufactured by ULVAC-PHI, Inc., model: Quantera SXM). It should be noted that the background was subtracted by Shirley's method and the peaks were fitted using a Gaussian function.

The compositions of prepared phosphors, the divalent Eu ratios in the vicinity of the surface, and the emission intensities Y/y and chromaticities y measured by irradiating the samples with a vacuum ultraviolet ray with a wavelength of 146nm are shown in Table 1. In this regard, Y and y are luminance Y and chromaticity y in the XYZ color coordinate system of International Commission on Illumination, and Y/y is a value relative to the standard sample (BaMgAl₁₀O₁₇:Eu). It should be noted that an asterisk was marked beside the sample number for Comparative Example while no asterisk was marked for Examples in table 1.

**(Table 1)**

| Sample number | A | D | x | y₁+y₂ | z | w | Divalent Eu Y/y | | y |
|---|---|---|---|---|---|---|---|---|---|
| | | | | | | | ratio (%) | (%) | |
| *1 | Sr | Mg | 2.900 | 0.100 | 2.000 | 0 | 80 | 42 | 0.120 |
| 2 | Sr | Mg | 2.970 | 0.030 | 2.000 | 0.001 | 50 | 102 | 0.064 |
| 3 | Sr | Mg | 3.500 | 0.001 | 2.000 | 0.100 | 30 | 108 | 0.055 |
| 4 | Sr | Mg | 3.000 | 0.009 | 1.900 | 0.001 | 10 | 111 | 0.057 |
| 5 | Sr | Mg | 2.997 | 0.003 | 2.100 | 0.001 | 10 | 110 | 0.054 |
| 6 | Sr | Mg | 2.991 | 0.009 | 2.000 | 0.001 | 0 | 112 | 0.053 |
| 7 | Sr | Mg | 3.000 | 0.006 | 2.000 | 0.001 | 5 | 120 | 0.055 |
| 8 | Sr | Mg | 3.100 | 0.003 | 2.000 | 0.001 | 10 | 123 | 0.056 |
| 9 | Sr | Mg | 2.986 | 0.014 | 2.000 | 0.040 | 20 | 120 | 0.057 |
| 10 | Sr | Mg | 2.988 | 0.012 | 2.000 | 0.040 | 20 | 127 | 0.059 |
| 11 | Sr_{0.95}Ba_{0.05} | Mg | 2.986 | 0.014 | 2.000 | 0.010 | 30 | 90 | 0.052 |
| 12 | Sr_{0.99}Ba_{0.01} | Mg | 2.986 | 0.014 | 2.000 | 0.010 | 20 | 108 | 0.055 |
| 13 | Sr | Mg_{0.9}Zn_{0.1} | 2.985 | 0.015 | 2.000 | 0.010 | 20 | 110 | 0.056 |
| 14 | Sr | Mg_{0.8}Zn_{0.2} | 2.985 | 0.015 | 2.000 | 0.010 | 35 | 92 | 0.068 |
| Standard sample Ba_{0.9}MgAl₁₀O₁₇:Eu_{0.1} | | | | | | | | 100 | 0.055 |

As is clear from Table 1, the phosphor of the present invention has high luminance at vacuum-ultraviolet excitation and chromaticity y comparable to that of BAM:Eu. Moreover, the phosphor having the divalent Eu ratio in the vicinity of the surface of 20 mol % or less has particularly high luminance and good chromaticity y.

### (Examples of manufacture of PDPs)

PDPs (42 inches) that having the structure of Fig. 2 were manufactured according to the construction of the above-described embodiment of an AC surface-discharge type PDP, using the same blue phosphors as those of the sample numbers 1 to 8 and 13 in the above Examples of manufacture of phosphors, and the luminance retaining rate was evaluated. The luminance retaining rates (rate of the luminance Y value after driving relative to the initial luminance Y value) after accelerated driving (equivalent to 3000 hours driving) are shown in Table 2. The panels displayed a fixed image with one color of blue. It should be noted that an asterisk was marked beside the sample number for Comparative Example while no asterisk was marked for Examples in table 2.

**(Table 2)**

| Sample number | A | D | x | y₁+y₂ | z | w | Divalent Eu ratio (%) | Luminance retaining rate (%) |
|---|---|---|---|---|---|---|---|---|
| *15 | Sr | Mg | 2.900 | 0.100 | 2.000 | 0 | 80 | 85 |
| 16 | Sr | Mg | 2.970 | 0.030 | 2.000 | 0.001 | 50 | 93 |
| 17 | Sr | Mg | 3.500 | 0.001 | 2.000 | 0.100 | 30 | 95 |
| 18 | Sr | Mg | 3.000 | 0.009 | 1.900 | 0.001 | 10 | 98 |
| 19 | Sr | Mg | 2.997 | 0.003 | 2.100 | 0.001 | 10 | 100 |
| 20 | Sr | Mg | 2.991 | 0.009 | 2.000 | 0.001 | 0 | 100 |
| 21 | Sr | Mg | 3.000 | 0.006 | 2.000 | 0.001 | 5 | 100 |
| 22 | Sr | Mg | 3.100 | 0.003 | 2.000 | 0.001 | 10 | 100 |
| 23 | Sr | Mg_{0.9}Zn_{0.1} | 2.985 | 0.015 | 2.000 | 0.010 | 20 | 97 |
| Standard sample Ba_{0.9}MgAl₁₀O₁₇:Eu_{0.1} | | | | | | | | 82 |

As is clear from Table 2, it is confirmed that the luminance degradation in the cases where the phosphor of the present invention was used was inhibited significantly. In particular, when the divalent Eu ratio in the vicinity of the surface of the phosphor particle was 20 or less, hardly any luminance degradation was induced. In contrast, significant luminance degradation of the sample of Comparative Example during driving was observed.

### Industrial Applicability

A plasma display panel with a long life having high luminance, high color purity, and a property of low luminance degradation during PDP driving can be provided by using the phosphor of the present invention. The phosphor of the present invention can be applied to the application of an electrodeless fluorescent lamp, and a fluorescent panel that is used as a backlight of a liquid crystal display device, and the like.

## Claims

1. A phosphor, which is represented by the general formula
xAO• y₁EuO• y₂EuO_{3/2} DO• zSiO₂• wCaCl₂ wherein A is at least one selected from Sr and Ba, D is at least one selected from Mg and Zn, and
2.970≤x≤3.500, 0.001≤y₁+y₂≤0.030, 1.900≤z≤2.100, and 0.001≤w≤0.100 are satisfied, and
which has 50 mol % or less of the divalent Eu ratio (ratio of the divalent Eu element to the total of the Eu elements) in the vicinity of the surface of the phosphor particle.

2. A phosphor, which is represented by the general formula
x'SrO•y_{1'}EuO•y_{2'}EuO_{3/2}•MgO•z'SiO₂•w'CaCl₂ wherein 2.980:≤x'≤3.000, 0.010≤y_{1'}+y_{2'} ≤0.020, 1.900≤z' ≤2.100, and 0.010≤w' ≤0.040 are satisfied, and which has 20 mol % or less of the divalent Eu ratio (ratio of the divalent Eu element to the total of the Eu elements) in the vicinity of the surface of the phosphor particle.

3. A light-emitting device, which includes a phosphor layer wherein the phosphor according to claim 1 or 2 is used.

4. The light-emitting device according to claim 3, which is a plasma display panel.

5. The light-emitting device according to claim 4,
wherein the plasma display panel has a construction comprising: a front panel, a back panel that is arranged to face the front panel, barrier ribs that define the clearance between the front panel and the back panel, a pair of electrodes that are disposed on the back panel or the front panel, an external circuit that is connected to the electrodes, a discharged gas that is present at least between the electrodes and contains xenon that emits a vacuum ultraviolet ray by applying voltage between the electrodes using the external circuit, and phosphor layers that emit visible light induced by the vacuum ultraviolet ray,
and a blue phosphor layer of the phosphor layers contains the blue phosphor.
